# EUROPÄISCHE PATENTSCHRIFT

(11) **EP 1 798 527 B1**
(45) Veröffentlichungstag und Bekanntmachung des Hinweises auf die Patenterteilung: **16.04.2014**
(21) Anmeldenummer: 06014776.6
(22) Anmeldetag: 15.07.2006
(51) Int. Cl.: G01D 5/347, G01D 11/20

(54) **Sicherungsvorrichtung für den Transport und die Montage einer Messeinrichtung**
Securing device for the transport and assembly of a measuring apparatus
Dispositif de fixation pour le transport et le montage d'un dispositif de mesure

(30) Priorität: 15.12.2005 DE 102005060687
(43) Veröffentlichungstag der Anmeldung: 20.06.2007
(73) Patentinhaber: Dr. Johannes Heidenhain GmbH, 83301 Traunreut (DE)
(72) Erfinder: Fiedler, Karl, 83313 Siegsdorf (DE); Tauber, Johann, 83301 Traunreut (DE)

(56) Entgegenhaltungen:
- DE-A1- 10 109 909
- DE-A1- 10 330 955
- JP-A- H11 281 341

## Beschreibung

Die Erfindung betrifft eine Sicherungsvorrichtung für den Transport und die Montage einer Messeinrichtung zur Bestimmung der Lage zweier relativ zueinander beweglicher Bauteile nach dem Oberbegriff des Patentanspruchs 1.

Eine solche Sicherungsvorrichtung ist ausgebildet und vorgesehen zur Verwendung bei einer Messeinrichtung, die eine längserstreckte Messteilung, einen die Messteilung tragenden Trägerkörper, eine die Messteilung abtastende und in definiertem Abstand zur Messteilung entlang einer Messrichtung geführte Abtasteinrichtung sowie einen Montagefuß zum Befestigen der Abtasteinrichtung an einem der beiden zueinander beweglichen Bauteile aufweist. Bei den beiden zueinander beweglichen Bauteilen kann es sich z.B. um einen Schlitten und das zugehörige Bett einer Werkzeugmaschine handeln. In dieser werden der Trägerkörper mit der Messteilung einerseits und der Montagefuß mit Abtasteinrichtung andererseits an je einem der Bauteile befestigt.

Die Sicherungsvorrichtung dient dabei dazu, beim Transport und bei der Montage der genannten Messeinrichtung deren Abtasteinrichtung in einer definierten Position (Solllage) auf dem Trägerkörper der Messeinrichtung festzulegen. Hierzu umfasst die Sicherungsvorrichtung einen entlang einer in Messrichtung erstreckten Führungsbahn des Trägerkörpers der Sicherungsvorrichtung (gemeinsam mit dem Montagefuß der Abtasteinrichtung) längsverschieblichen Grundkörper, der an dem Trägerkörper durch Klemmkräfte derart festlegbar ist, dass er den Montagefuß in der Solllage bezüglich des Trägerkörpers hält.

Aus der DE 199 18 654 A1 ist eine Sicherungsvorrichtung für den Transport und die Montage einer Messeinrichtung der eingangs genannten Art bekannt. Diese Sicherungsvorrichtung weist mindestens einen entlang einer Führungsbahn des Trägerkörpers längsverschieblichen Grundkörper sowie ein lösbar mit dem Grundkörper verbundenes und formschlüssig in die Führungsbahn des Trägerkörpers eingreifendes Führungselement auf, mit dem der Grundkörper der Sicherungsvorrichtung an dem Trägerkörper der Messteilung festklemmbar ist, um den Montagefuß während des Transportes und der Montage der Messeinrichtung in einer definierten Solllage auf dem Trägerkörper zu halten. Zum Einleiten der Klemmkräfte, mittels derer die Sicherungsvorrichtung an dem Trägerkörper der Messteilung festklemmbar ist, dient ein Bedienelement in Form einer Stellschraube. Deren Schraubenkopf ist auf der dem Trägerkörper abgewandten Oberfläche des Grundkörpers der Sicherungsvorrichtung angeordnet und zur Betätigung durch ein Werkzeug vorgesehen.

Bei einer aus der DE 101 09 909 A1 bekannten Sicherungsvorrichtung der genannten Art ist zur Erleichterung der Zugänglichkeit des zum Lösen der Sicherungsvorrichtung dienenden Bedienelementes nach Einbau der Messeinrichtung in eine Werkzeugmaschine vorgesehen, dass ein Betätigungsabschnitt des Bedienelementes (z. B. einer Stellschraube) zumindest dann über den seitlichen Rand der dem Trägerkörper abgewandten Oberfläche des Grundkörpers der Sicherungsvorrichtung seitlich hinausragt, wenn der Grundkörper an dem Trägerkörper festgeklemmt ist, so dass der Betätigungsabschnitt des Bedienelementes zum Einleiten und/oder Aufheben der Klemmkräfte seitlich des Grundkörpers betätigbar ist.

Die DE 103 30 955 A1 offenbart eine weitere Sicherungsvorrichtung aus dem Stand der Technik.

Es ist erkennbar, dass unterschiedliche Ausgestaltungen sowie unterschiedliche Einbausituationen einer Messeinrichtung in einer Werkzeugmaschine zu unterschiedlichen Bedingungen führen, unter denen die Sicherungsvorrichtung nach dem Einbau der Messeinrichtung von dieser zu lösen ist, um im Betrieb der Messeinrichtung ein Verfahren der Abtasteinrichtung zusammen mit dem Montagefuß entlang des die Messteilung tragenden Trägerkörpers zu ermöglichen.

Der Erfindung liegt daher das Problem zugrunde, eine Sicherungsvorrichtung für den Transport und die Montage einer Messeinrichtung der eingangs genannten Art zu schaffen, die mit einfachen Mitteln die Herstellung einer Klemmverbindung zur Arretierung des Montagefußes in einer Solllage sowie das Lösen der Klemmverbindung nach bestimmungsgemäßem Einbau der Messeinrichtung ermöglicht.

Dieses Problem wird erfindungsgemäß durch die Schaffung einer Sicherungsvorrichtung mit den Merkmalen des Patentanspruchs 1 gelöst.

Danach ist an dem (in einer Führungsbahn an dem Trägerkörper der Messeinrichtung verschiebbaren) Grundkörper der Sicherungsvorrichtung ein Klemmelement schwenkbar gelagert, das eine exzentrisch bezüglich seiner Schwenkachse verlaufende Exzenterfläche aufweist, die durch Verschwenken des Klemmelementes, in Abhängigkeit von dessen Schwenkrichtung, in oder außer Eingriff mit dem Trägerkörper bringbar ist, so dass der Grundkörper - je nach Schwenklage des Klemmelementes - an dem Trägerelement festgelegt ist bzw. an diesem verschieblich gelagert ist.

Konkret kann vorgesehen sein, dass der Grundkörper der Sicherungsvorrichtung dann an dem Trägerkörper der Messeinrichtung festgelegt (festgeklemmt) ist, wenn das Klemmelement in eine Lage verschwenkt ist, in der die Exzenterfläche des Klemmelementes mit dem Trägerkörper in Eingriff steht und gegen diesen drückt. Umgekehrt lagert der Grundkörper der Sicherungsvorrichtung dann verschieblich an dem Trägerkörper der Messeinrichtung, wenn das Klemmelement in eine Lage verschwenkt ist, in der die Exzenterfläche des Klemmelementes außer Eingriff mit dem Trägerkörper steht. Das "außer Eingriff stehen" kann dabei einerseits bedeuten, dass die Exzenterfläche des Klemmelementes von dem Trägerkörper der Messeinrichtung beabstandet ist, also diesen nicht berührt; andererseits kann die Exzenterfläche des Klemmelementes auch in dem Zustand, in dem sie außer Eingriff mit dem Trägerkörper ist, an letzterem (lose) anliegen, ohne jedoch eine Klemmkraft zu erzeugen, die der Verschiebung des Grundkörpers der Sicherungsvorrichtung entlang des Trägerkörpers entgegen stünde.

Unter einer Exzenterfläche des schwenkbar gelagerten Klemmelementes wird dabei eine Fläche verstanden, die eine solche (bezüglich der Schwenkachse exzentrische) Geometrie aufweist, dass beim Verschwenken des Klemmelementes der Abstand zwischen der Exzenterfläche und einem zugeordneten Abschnitt des Trägerkörpers der Messeinrichtung variiert und hierdurch die Exzenterfläche mit jenem Abschnitt des Trägerkörpers in und außer Eingriff bringbar ist.

Wenn das Klemmelement über seine Exzenterfläche mit dem Trägerkörper der Messeinrichtung in Eingriff steht, dann übt das Klemmelement über die Exzenterfläche auf den Trägerkörper eine solche Kraft aus, dass aufgrund der hierdurch erzeugten Reaktionskraft (Gegenkraft) der Grundkörper der Sicherungsvorrichtung gegen den Trägerkörper, insbesondere gegen den Rand der zugeordneten Führungsbahn verspannt und hierdurch am Trägerkörper festgeklemmt wird.

Die erfindungsgemäße Lösung hat den Vorteil, dass sie durch Verkippen des Klemmelementes, z. B. um einen Winkel von 90°, wobei - je nach Schwenkrichtung - das Klemmelement in oder außer Eingriff mit dem Trägerkörper der Messeinrichtung gebracht wird, in einfacher Weise ein Arretieren bzw. Lösen der Sicherungsvorrichtung ermöglicht, um den Montagefuß an dem Trägerkörper der Messeinrichtung zu fixieren bzw. verschieblich zu lagern. Dabei kann der Montagefuß in einer beliebigen Position - entlang der Verschieberichtung des Montagefußes bzw. der Erstreckungsrichtung der Messteilung am Trägerkörper (Messrichtung) betrachtet - am Trägerkörper festgelegt werden.

Es ist dabei ohne weiteres möglich, an dem schwenkbar gelagerten Klemmelement einen Betätigungsabschnitt zum manuellen Verschwenken des Klemmelementes und/oder einen Betätigungsabschnitt zum Verschwenken des Klemmelementes mittels eines Werkzeugs vorzusehen. Hierdurch wird eine flexible Handhabung des Klemmelementes unter verschiedenen Einbaubedingungen der Messeinrichtung ermöglicht. Dabei ist der mit einem Werkzeug zu ergreifende Betätigungsabschnitt des Klemmelementes, bei dem es sich beispielsweise um einen Innen- oder Außenmehrkant handeln kann, bevorzugt so angeordnet, dass das zur Betätigung des Klemmelementes vorgesehene Werkzeug entlang einer quer zur Verschieberichtung des Grundkörpers der Sicherungsvorrichtung, also entlang einer quer zur Führungsbahn des Trägerkörpers verlaufenden Richtung, mit dem Betätigungsabschnitt in Eingriff bringbar ist.

Da eine zur Herstellung einer Klemmkraft auf dem Exzenterprinzip beruhende Sicherungsvorrichtung sehr kompakt ausgebildet werden kann, ist eine solche Sicherungsvorrichtung insbesondere auch für sehr kurze sowie kleinprofilige Messeinrichtungen geeignet.

Weiterhin können durch ein Klemmelement mit einer Exzenterfläche problemlos so große Klemmkräfte erzeugt werden, dass ein einzelner Grundkörper mit zugehörigem Klemmelement, der an einer Stirnseite des Montagefußes angeordnet ist, ausreicht, um den Montagefuß am Trägerkörper der Messeinrichtung festzulegen.

Hierbei ist zu beachten, dass zur Verbindung des Grundkörpers der Sicherungsvorrichtung (an dem das Klemmelement schwenkbar gelagert ist) mit dem Montagefuß eine einfach herstell- und lösbare Steckverbindung besonders vorteilhaft ist. Durch die Erzeugung der Klemmkräfte, mit denen der Grundkörper der Sicherungsvorrichtung in einer beliebigen, vorgebbaren Position am Trägerkörper der Messeinrichtung fixiert wird, können gleichzeitig die zur Herstellung der Steckverbindung dienenden Steckerelemente, z. B. Steckerstifte einerseits und zugeordnete Steckeröffnungen andererseits, derart gegeneinander verspannt werden, dass die Steckverbindung im verspannten Zustand im Wesentlichen unlösbar ist. Hierdurch ist sichergestellt, dass beim Festklemmen des Grundkörpers der Sicherungsvorrichtung am Trägerkörper (durch Verschwenken des Klemmelementes in eine geeignete Lage) der Grundkörper der Sicherungsvorrichtung zugleich auch fest mit dem Montagefuß der Messeinrichtung verspannt wird. Hierdurch wird erreicht, dass ein Verklemmen des Grundkörpers der Sicherungsvorrichtung am Trägerkörper der Messeinrichtung eine sichere Festlegung bzw. Fixierung des Montagefußes in der entsprechenden Lage am Trägerkörper bewirkt. Es ist daher nicht erforderlich, auf der gegenüberliegenden, zweiten Stirnseite einen weiteren Grundkörper der Sicherungsvorrichtung mit zugeordnetem Klemmelement - etwa als Widerlager für die entsprechenden Komponenten der Sicherungsvorrichtung auf der ersten Stirnseite des Montagefußes - vorzusehen.

Die erfindungsgemäße Lösung kann aber auch in der Weise verwirklicht werden, dass an jeder der beiden Stirnseiten des Montagefußes ein Grundkörper der Sicherungsvorrichtung mit einem zugeordnetem, eine Exzenterfläche aufweisenden Klemmelement angeordnet ist.

In dem Fall, in dem nur an einer Stirnseite des Montagefußes ein Grundkörper der Sicherungsvorrichtung mit zugeordnetem Klemmelement angeordnet ist, kann die andere Stirnseite ohne Einschränkung als Kabelausgang genutzt werden, und zwar auch mit einem bereits vor dem Einbau der Messeinrichtung in eine Werkzeugmaschine vormontierten, aus dem Kabelausgang herausragenden Kabel.

Weiterhin kann an der freien, nicht mit Komponenten der Sicherungsvorrichtung belegten Stirnseite des Montagefußes ein Führungsteil angeordnet sein, das bevorzugt in derselben Führungsbahn geführt ist wie der Grundkörper der an der ersten Stirnseite des Montagefußes angeordneten Komponenten der Sicherungsvorrichtung und das vorteilhaft ein Zugmittel aufweist, mit dem es bei Bedarf von dem Montagefuß abgezogen werden kann.

Gemäß einer Ausgestaltung dieser Erfindungsvariante ist ein Koppelelement vorgesehen, über das die Sicherungsvorrichtung und das Führungsteil derart miteinander verbunden sind, dass sie bei einer Verschiebung des Montagefußes stets gemeinsam zusammen mit dem Montagefuß bewegt werden. Das Koppelelement ist lösbar, z. B. über jeweils eine Steckverbindung, mit der Sicherungsvorrichtung einerseits und dem Führungsteil andererseits verbunden, so dass das Koppelelement ohne weiteres entfernt werden kann, wenn die Sicherungsvorrichtung und das Führungsteil von dem Trägerkörper der Messeinrichtung abgenommen werden sollen.

In einer bevorzugten Weiterbildung der Erfindung ist der mindestens eine am Montagefuß anzuordnende Grundkörper der Sicherungsvorrichtung so ausgestaltet, dass er sich im entriegelten Zustand, d. h. in einer Lage des Klemmelementes, in der der Grundkörper nicht an den Trägerkörper der Messeinrichtung geklemmt ist, durch eine Bewegung mit einer Komponente senkrecht zur Erstreckungsrichtung der Führungsbahn außer Eingriff mit der Führungsbahn bringbar ist, so dass anschließend der Grundkörper zusammen mit dem Klemmelement mit einer Bewegung entlang einer zweiten Richtung senkrecht zur Erstreckungsrichtung der Führungsbahn aus der Führungsbahn entnehmbar ist.

Dies kann beispielsweise dadurch erreicht werden, dass Führungselemente über die der Grundkörper der Sicherungsvorrichtung längsverschieblich in der Führungsbahn des Trägerkörpers (gebildet beispielsweise durch zwei parallel verlaufende Längsnuten) geführt ist, an ihren Außenseiten abgeschrägt sind.

Dieser Aspekt der Erfindung ist bei unterschiedlich gestalteten, entlang einer Führungsbahn eines Trägerkörpers einer Messeinrichtung verschiebbaren Grundkörpern für eine Sicherungsvorrichtung anwendbar und realisierbar, unabhängig davon, ob der Grundkörper erfindungsgemäß mittels eines eine Exzenterfläche aufweisenden Klemmelementes oder in sonstiger, beispielsweise aus dem Stand der Technik gemäß DE 199 18 654 A1 oder DE 101 09 909 A1 bekannter Weise am Trägerkörper fixierbar ist.

Weitere Einzelheiten und Vorteile der Erfindung werden bei der nachfolgenden Beschreibung eines Ausführungsbeispieles anhand der Figuren deutlich werden.

Es zeigen:
- Fig. 1a: eine erste perspektivische Darstellung einer Messeinrichtung mit einer Sicherungsvorrichtung, um einen Montagefuß der Messeinrichtung in einer definierten Solllage zu halten, und zwar im entriegelten Zustand der Sicherungsvorrichtung;
- Fig. 1b: eine zweite perspektivische Darstellung der Anordnung aus Figur 1b;
- Fig. 1c: einen Längsschnitt durch die Anordnung aus Figur 1a;
- Fig. 2a: eine perspektivische Darstellung der Anordnung aus Figur 1a im verriegelten Zustand der Sicherungsvorrichtung;
- Fig. 2b: eine zweite perspektivische Darstellung der Anordnung aus Figur 1 im verriegelten Zustand der Sicherungsvorrichtung a;
- Fig. 2c: einen Längsschnitt durch die Anordnung aus Figur 2a;
- Fig. 3: eine perspektivische Rückansicht der Anordnung aus den Figuren 1a bis 1c;
- Fig. 4: eine perspektivische Ansicht der dem Trägerkörper der Messeinrichtung zugewandten Unterseite der Sicherungsvorrichtung aus den Figuren 1a bis 2c;
- Fig. 5: eine perspektivische Ansicht der dem Trägerkörper der Messeinrichtung zugewandten Unterseite eines die Sicherungsvorrichtung ergänzenden Führungsteiles.

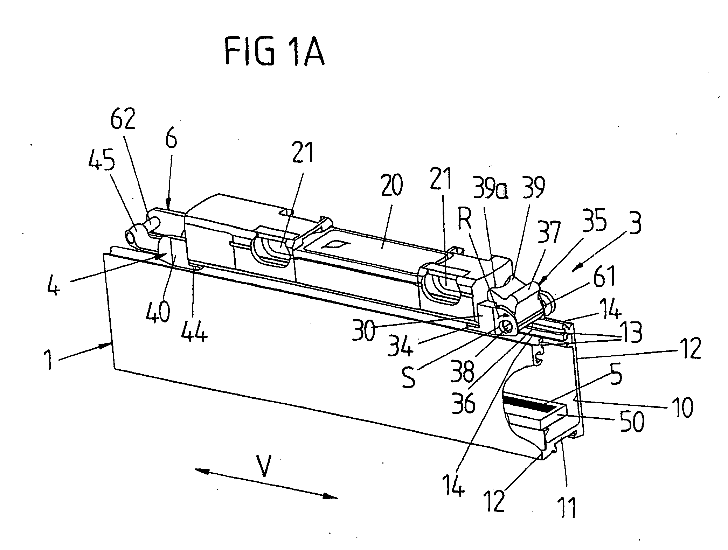

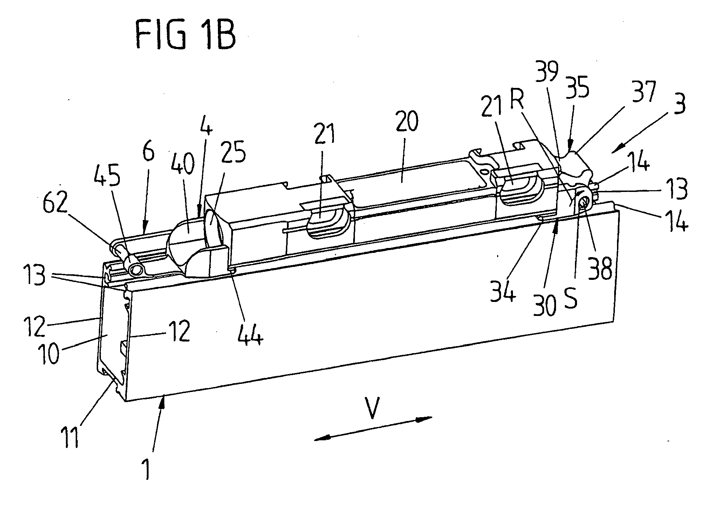

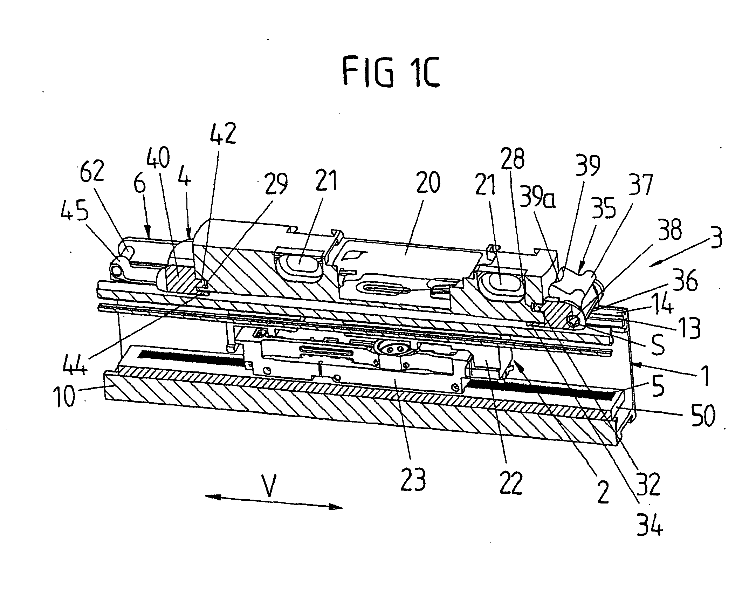

In den Figuren 1a bis 1c ist eine Messeinrichtung zur Bestimmung der Lage zweier relativ zueinander beweglicher Bauteile einer Werkzeugmaschine dargestellt, die einen Trägerkörper 1, eine Abtasteinrichtung 2 und eine Sicherungsvorrichtung 3 umfasst, mit der die Abtasteinrichtung 2 in einer definierten Solllage auf dem Trägerkörper 1 gehalten werden kann.

Gemäß den Figuren 1a bis 1c besteht der Trägerkörper 1 aus einem längserstreckten Hohlprofil 10 mit einer Basis 11, von der im Wesentlichen senkrecht zwei seitliche Schenkel 12 abstehen. Dieses Hohlprofil 10 umschließt einen inneren Hohlraum, in dem eine entlang einer Messrichtung erstreckte Messteilung 5 angeordnet ist. Das Hohlprofil wird üblicherweise an seinen beiden stirnseitigen Enden mit seitlichen Abschlusselementen versehen und weist in den Figuren nicht erkennbare Montagestellen zur Befestigung des Trägerkörpers 1 an einem Maschinenbauteil, wie z. B. dem Schlitten einer Werkzeugmaschine, auf.

Innerhalb des Hohlprofils 10 ist längsverschieblich der Abtastwagen 23 einer Abtasteinrichtung 2 angeordnet, der zum Abtasten der optischen Messteilung 5 einen Messkopf aufweist, der beispielsweise mit einer Lichtquelle, einem Linsensystem und zugeordneten Fotoelementen bestückbar ist. Der Abtastwagen 23 ist entlang einer Verschieberichtung V, die mit der Messrichtung - also der Erstreckungsrichtung der Messteilung des Trägerkörpers 1 - zusammenfällt, längsverschieblich an der Messeinrichtung (z.B. am die Messteilung 5 tragenden Maßstab 50 der Messeinrichtung) gelagert. Ferner ist der Abtastwagen 23 - zumindest entlang der Verschieberichtung V starr - über einen Mitnehmer 22 mit einem außerhalb der von dem Hohlprofil 10 umschlossenen Hohlkammer angeordneten Montagefuß 20 verbunden, der zur Befestigung der Abtasteinrichtung 2 an einem zweiten Maschinenbauteil, wie z. B. dem Bett der oben erwähnten Werkzeugmaschine, dient. Hierzu weist der Montagefuß 20 entsprechende Befestigungsöffnungen 21 auf.

Eine Messeinrichtung der vorstehend beschriebenen Art, mit der eine Längenmessung durchführbar ist, um die Lage zweier Maschinenbauteile zueinander zu bestimmen, ist allgemein bekannt und braucht daher hinsichtlich ihrer Funktion hier nicht näher erläutert zu werden.

Anhand der Figuren 1a bis 1c ist weiterhin erkennbar, dass der Messeinrichtung eine Sicherungsvorrichtung 3 zugeordnet ist, die mit dem Montagefuß 20 verbunden ist. Diese Sicherungsvorrichtung 3 umfasst einen Grundkörper 30, der auf einer der beiden entlang der Verschieberichtung V voneinander beabstandeten Stirnseiten des Montagefußes 20 angeordnet ist und die mit Steckerelementen 32 in Form von Zapfen bzw. Stiften versehen ist, die zur Bildung einer Steckverbindung in zugeordnete Ausnehmungen bzw. Öffnungen 28 des Montagefußes 20 eingreifen.

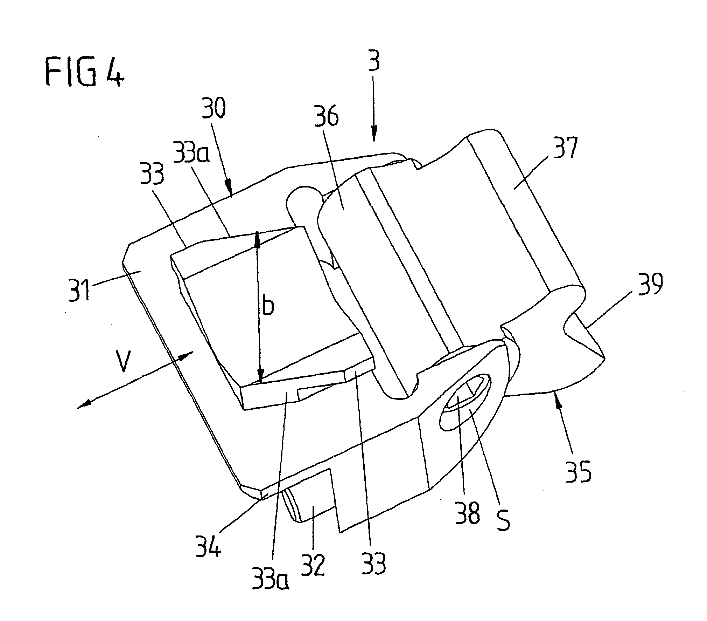

Der Grundkörper 30 der Sicherungsvorrichtung 3 weist gemäß Figur 4 Führungselemente 33 auf, die an der (dem Trägerkörper 1 zugewandten) Unterseite 31 des Grundkörpers 30 der Sicherungsvorrichtung 3 angeformt sind und die in einer durch zwei Längsnuten gebildeten Führungsbahn 13 des Trägerkörpers 1 längsverschieblich geführt sind, wobei sich die Längsnuten am freien Ende je eines der beiden seitlichen Schenkel 12 des Trägerkörpers 1 in Verschieberichtung V erstrecken. Ferner weist der Grundkörper 30 der Sicherungsvorrichtung 3 mindestens eine Lasche 34 auf, die den Montagefuß 20 untergreift und hierdurch den Abstand des Montagefußes 20 von dem Trägerkörper 1 quer zur Verschieberichtung V festlegt.

Die durch zwei längserstreckte, einander quer zur Verschieberichtung V gegenüberliegende Nuten gebildete Führungsbahn 13 des Trägerkörpers 1 ist nach oben hin, also an den freien Enden der einander gegenüberliegenden seitlichen Schenkel 12 des Trägerkörpers 1 durch einen Vorsprung 14 begrenzt, der die Führungselemente 33 des Grundkörpers 30 der Sicherungsvorrichtung 3 übergreift.

Im Ergebnis ist der Grundkörper 30 der Sicherungsvorrichtung 3 entlang der Verschieberichtung V des Montagefußes 20 längsbeweglich an der Führungsbahn 13 des Trägerkörpers 1 gelagert und kann zusammen mit der Abtasteinrichtung 2 und dem Montagefuß 20 entlang der Verschieberichtung V in eine definierte, vorgebbare Solllage auf dem Trägerkörper 1 verschoben werden.

Zur Erleichterung der Verschiebebewegung und zur zuverlässigen Führung des Montagefußes 20 bei der Verschiebebewegung sowie zur anschließenden definierten Festlegung der Sicherungsvorrichtung 3 am Trägerkörper 1 ist auf der dem Grundkörper 30 der Sicherungsvorrichtung 3 in Verschieberichtung V abgewandten Stirnseite des Montagefußes 20 ein Führungsteil 4 angeordnet, dessen Grundkörper 40 derart schalenartig geformt ist, dass ein an jener Stirnseite des Montagefußes 20 vorgesehener Kabelausgang 25 nicht blockiert wird, also aus dem Kabelausgang 25 ein Anschlusskabel hinausragen kann. Das Führungsteil 4 weist weiterhin mindestens eine Lasche 44 auf, mit der es - entsprechend den Laschen 34 des Grundkörpers 30 der Sicherungsvorrichtung 3 - den Montagefuß 20 untergreift und hierdurch den Abstand des Montagefußes 20 von dem Trägerkörper 1 quer zur Verschieberichtung V festlegt. Die mindestens eine Lasche 34 des Grundkörpers 30 der Sicherungsvorrichtung 3 einerseits und die mindestens eine Lasche 44 des Grundkörpers 40 des Führungsteiles 4 andererseits sind dabei so ausgebildet und angeordnet, dass vorteilhaft ein einheitlicher Abstand zwischen dem Montagefuß 20 und dem Trägerkörper 1 entlang der Länge des Montagefußes 20 gewährleistet ist.

Zur Anbindung des Führungsteiles 4 an die zugeordnete, mit dem Kabelausgang 25 versehene Stirnseite des Montagefußes 20 ragen von dem Grundkörper 40 des Führungsteiles 4 Steckerelemente 42 in Form von Steckerstiften bzw. -zapfen ab, die in zugeordnete Steckerelemente 29 des Montagefußes in Form von Steckeröffnungen eingreifen.

Weiterhin steht von dem Führungsteil 4 entlang der Verschieberichtung V ein Zugmittel 45 ab, mit dem das Führungsteil 4 bei Bedarf - unter Lösen der Steckverbindung 42, 29 - von dem Montagefuß 20 abgezogen werden kann.

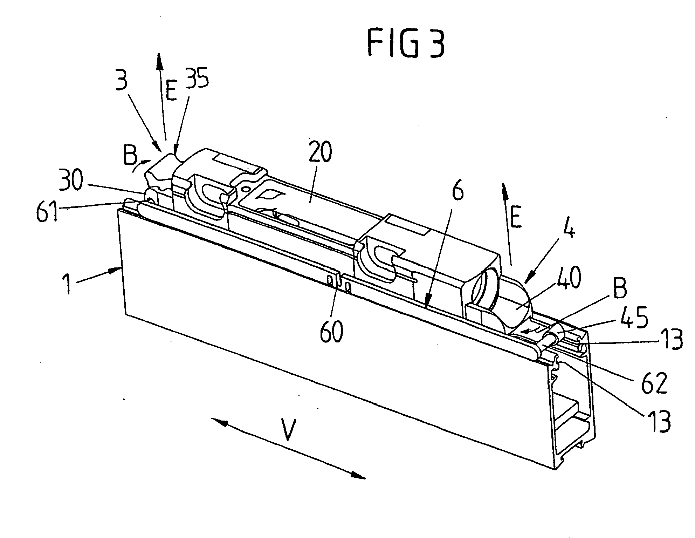

Anhand der in Figur 3 dargestellten Rückansicht der Anordnung aus den Figuren 1a bis 1c wird deutlich, dass die Sicherungsvorrichtung 3 und das Führungsteil 4 über ein Koppelelement 6 in Form einer Koppelstange miteinander gekoppelt sind, das sich parallel zu dem Montagefuß 20 von dessen einer, mit der Sicherungsvorrichtung 3 versehenen Stirnseite zu der anderen, mit dem Führungsteil 4 versehenen Stirnseite erstreckt. Das Koppelelement 6 weist an seinen beiden Enden jeweils ein Steckerelement 61 bzw. 62 in Form eines Zapfens bzw. Steckerstiftes auf, von denen das eine Steckerelement 61 in eine zugeordnete seitliche Öffnung des Grundkörpers 30 der Sicherungsvorrichtung 3 gesteckt ist, bei der es sich z.B. um einen Zugang zu einem Eingriffsbereich für ein Werkzeug handeln kann, wie nachfolgend noch beschrieben werden wird, und von denen das andere Steckerelement 62 in eine am Ende des Zugmittels 45 gebildete Öse gesteckt ist. In seinem - in Verschieberichtung V - mittleren Bereich weist das Koppelelement einen zum Toleranzausgleich dienenden Deformationsbereich 60 in Form eines mäanderförmigen Dehnelementes auf, mit dem Montagetoleranzen kompensiert werden können.

Durch das Koppelelement 6 wird eine gemeinsame Verschiebbarkeit der Sicherungsvorrichtung 3 und des Führungsteiles 4 bei einer Längsbewegung des Montagefußes 20 in Verschieberichtung V gewährleistet.

Wenn der Montagefuß 20 vor dem Einbau der Messeinrichtung in eine Werkzeugmaschine zusammen mit dem an einer Stirnseite des Montagefußes 20 angeordneten Grundkörper 30 der Sicherungsvorrichtung 3 und dem an der anderen Stirnseite des Montagefußes 20 angeordneten Führungsteil 4 in eine Solllage am Trägerkörper 1 verschoben worden ist, die beim Einbau der Messeinrichtung in eine Werkzeugmaschine beibehalten werden soll, dann lässt sich der Montagefuß 20 - und somit auch der Abtastwagen 23 der Abtasteinrichtung 2 - in dieser Solllage mittels der Sicherungsvorrichtung 3 festlegen. Hierzu ist am Grundkörper 30 der Sicherungsvorrichtung 3 ein Klemmelement 35 um eine quer zur Verschieberichtung V verlaufende Schwenkachse S schwenkbar angelenkt.

Das Klemmelement 35 weist eine Exzenterfläche 36, also eine bezüglich der Schwenkachse S exzentrisch ausgebildete äußere Oberfläche, auf, die in dem in den Figuren 1a bis 1c gezeigten entriegelten Zustand der Sicherungsvorrichtung 3, die ein Verschieben des Montagefußes 20 entlang der Verschieberichtung V gestattet, von dem Trägerkörper 1 beabstandet ist, insbesondere nicht an den Vorsprüngen 14 anliegt, welche die die Führungsbahn 13 bildenden Längsnuten übergreifen.

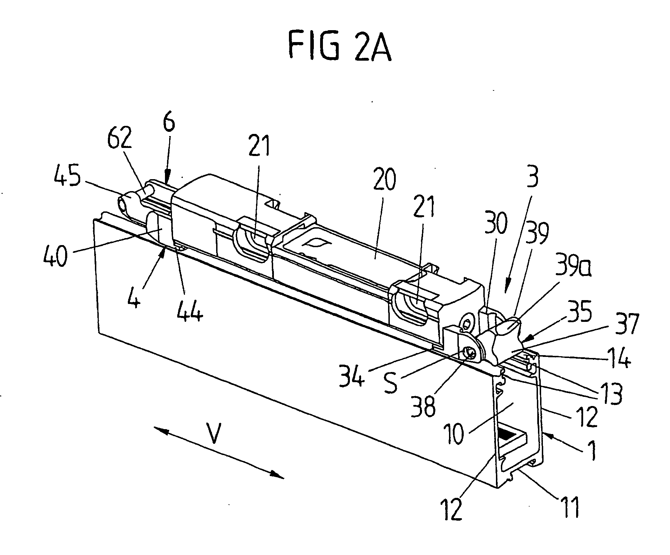

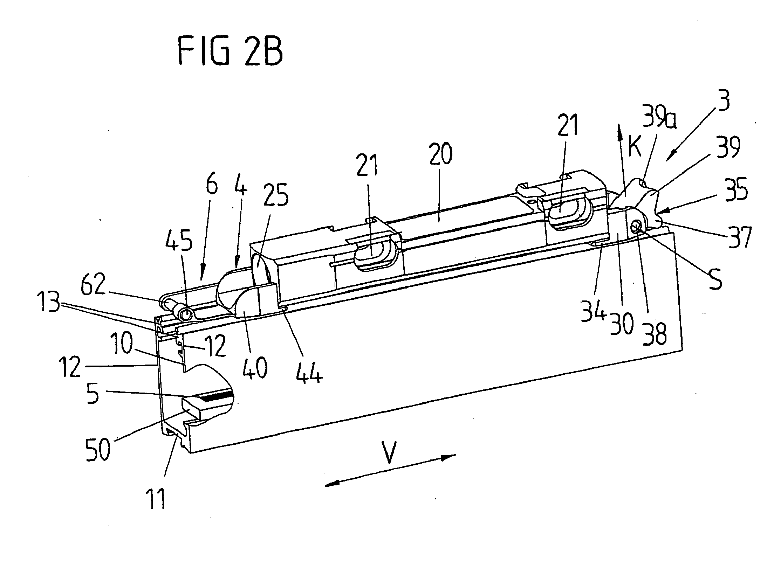

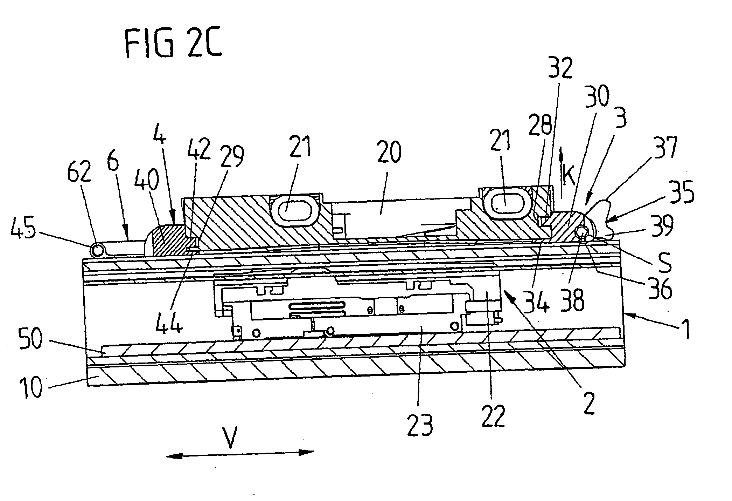

Das schwenkbar gelagerte Klemmelement 35 weist einen Betätigungsabschnitt 37 in Form einer Erhebung auf, die ein manuelles Verschwenken des Klemmelementes 35 entlang der in den Figuren 1a bis 1c durch einen Pfeil angedeuteten Schwenkrichtung R um etwa 90° (im Uhrzeigersinn) ermöglicht. Hierbei gerät die Exzenterfläche 36 des Klemmelementes 3 in Eingriff mit dem Trägerkörper 1, genauer mit den beiden entlang jeweils eines seitlichen Schenkels 12 des Trägerkörpers 1 erstreckten, die Längsnuten begrenzenden Vorsprüngen 14, und zwar in der Weise, dass das Klemmelement 35 eine Druckkraft auf den Trägerkörper 1 ausübt, vergl. Figuren 2a bis 2c. Durch die hiermit verbundene Reaktionskraft bzw. Gegenkraft wird der Grundkörper 30 der Sicherungsvorrichtung 3 entlang einer Klemmrichtung K - senkrecht zur Verschieberichtung V - gegen die die Führungsbahn 13 nach oben begrenzenden Vorsprünge 14 des Trägerkörpers 1 verspannt und hierdurch am Trägerkörper 1 festgeklemmt. Gleichzeitig werden durch die am Grundkörper 30 der Sicherungsvorrichtung 3 wirkenden Klemmkräfte auch dessen Steckerelemente 32 in Form von Steckerstiften bzw. -zapfen in den zugeordneten Steckeröffnungen 28 des Montagefußes 20 verspannt.

Im Ergebnis ist somit der Grundkörper 30 der Sicherungsvorrichtung 3 in einer definierten Position - in Verschieberichtung V betrachtet - am Trägerkörper 1 festgelegt, indem die Führungselemente 33 des Grundkörpers 30 unter der Wirkung der Klemmkräfte K in der Führungsbahn 13 des Trägerkörpers 1 festgeklemmt sind. Andererseits ist durch die Verspannung der Steckerelemente 32 (Stifte) des Grundkörpers 30 in den zugeordneten Steckeröffnungen 28 des Montagefußes 20 auch die Steckverbindung 28, 32 zwischen dem Montagefuß 20 und dem Grundkörper 30 der Sicherungsvorrichtung 3 gegen ein Lösen gesichert. Daher ist der Montagefuß 20 mittels des Grundkörpers 30 der Sicherungsvorrichtung 3 in der zuvor eingenommenen Solllage am Trägerkörper 1 festgelegt.

Nach dem Einbau der Messeinrichtung, also des Trägerkörpers 1 zusammen mit der Abtasteinrichtung 2 in eine Werkzeugmaschine, wobei die Abtasteinrichtung 2 zusammen mit dem Montagefuß 20 in der beschriebenen Weise mittels der Sicherungsvorrichtung 3 in einer definierten Solllage gehalten wurde, kann sodann die Sicherungsvorrichtung 3 wieder entriegelt werden, um die im Betrieb der Messeinrichtung erforderliche Längsbewegung der Abtasteinrichtung 2 in Verschieberichtung V entlang des Trägerkörpers 1 zu ermöglichen.

Hierzu wird das Koppelement 6 von der Sicherungsvorrichtung 3 und dem Führungsteil 4 gelöst; und es wird das Klemmelement 35 entgegen dem Uhrzeigersinn wieder in die in den Figuren 1a bis 1c gezeigte Ausgangsposition verschwenkt, in der die Exzenterfläche 36 des Klemmelementes 35 von dem Trägerkörper 1 beabstandet ist, also keine Druckkräfte auf den Trägerkörper 1 ausübt, die zum Verklemmen des Grundkörpers 30 der Sicherungsvorrichtung 3 in der Führungsbahn 13 führen.

Dieses Verschwenken des Klemmelementes 35 zum Entriegeln der Sicherungsvorrichtung 3 kann nicht nur durch manuelle Betätigung des Klemmelementes 35 an dem als Erhebung ausgebildeten Betätigungsabschnitt 37 erfolgen, sondern auch durch Betätigung des Klemmelementes mittels eines Werkzeugs. Hierzu ist an dem Klemmelement 35 im Bereich der Schwenkachse S ein Betätigungsabschnitt 38 in Form eines Innenmehrkants ausgebildet, und zwar in der Weise, dass ein geeignetes Werkzeug mit seinem Betätigungskopf seitlich, nämlich quer zur Verschieberichtung V, in den als Innenmehrkant ausgebildeten Betätigungsabschnitt 38 einführbar ist. Somit lässt sich das Klemmelement 35 auch durch Drehen eines in den als Innenmehrkant ausgebildeten Betätigungsabschnitt 38 eingeführten Werkzeugs verschwenken, um das Klemmelement 35 wahlweise in die Schwenklage zu bringen, in der dessen Exzenterfläche 36 vom Trägerkörper 1 beabstandet ist, oder in eine Lage, in der die Exzenterfläche 36 in Eingriff mit dem Trägerkörper 1 steht. Das ist insbesondere von Bedeutung, wenn die Sicherungsvorrichtung 3 nach dem Einbau der Messeinrichtung 1, 2 in einer Werkzeugmaschine entriegelt werden soll. Je nach den Einbaubedingungen im Einzelfall können dabei die Komponenten der Sicherungsvorrichtung 3 für eine Entriegelung nur schwer zugänglich sein. Es kann dann das Klemmelement 35 wahlweise manuell an der Erhebung 37 oder mittels eines seitlich eingeführten Werkzeugs am Innenmehrkant 38 betätigt werden, je nach dem welche Art der Betätigung unter den gegebenen Bedingungen vorteilhaft ausführbar ist..

Nach einem Zurückschwenken des Klemmelementes 35 in die in den Figuren 1a bis 1c gezeigte Ausgangslage, in der die Exzenterfläche 36 nicht im Eingriff mit dem Trägerkörper 1 steht, ist auch die Verspannung der Steckverbindung 28, 32 des Grundkörpers 30 der Sicherungsvorrichtung 3 mit dem Montagefuß 20 aufgehoben, so dass der Grundkörper 30 entlang der Verschieberichtung V - unter Lösen der Steckverbindung 28, 32 - von dem Montagefuß 20 abgenommen werden kann.

Bei dem Zurückschwenken des Klemmelementes 35 (entgegen dem Uhrzeigersinn) in die in den Figuren 1a bis 1c gezeigte Ausgangslage kann das Klemmelement 35 soweit verschwenkt werden, bis ein am Klemmelement 35 vorgesehener Vorsprung 39 mit der zugeordneten Stirnseite des Montagefußes 20 in Kontakt tritt bzw. an dieser anschlägt. Hierdurch wird eine Abdruckkraft in Verschieberichtung V ausgeübt, die dazu beitragen kann, mögliche Verspannungen der Sicherungsvorrichtung 3 am Montagefuß 20 aufzuheben, die ansonsten einem Entfernen der Sicherungsvorrichtung 3 vom Montagefuß 20 entgegenstünden. Der Vorsprung 39 dient also zum Abdrücken der Sicherungsvorrichtung 3 vom Montagefuß 20 beim Verschwenken des Klemmelementes 35 in eine Schwenklage, in der die Exzenterfläche 36 außer Eingriff mit dem Trägerkörper 1 steht.

Der mit der zugeordneten Stirnseite des Montagefußes 20 in Kontakt bringbare Endabschnitt 39a des Vorsprunges 39 ist muldenartig ausgebildet, so dass an dem Vorsprung 39 des Klemmelementes 35 ein Kabel vorbeigeführt werden kann, was eine Anordnung der Sicherungsvorrichtung 3 auch vor der mit einem Kabelausgang 25 versehenen Stirnseite des Montagefußes 20 gestattet.

Anschließend kann der Grundkörper 30 zusammen mit dem Klemmelement 35 entweder entlang der Verschieberichtung V von dem Trägerkörper 1 abgezogen werden oder alternativ senkrecht zur Verschieberichtung V vom Trägerkörper 1 abgenommen werden.

Die letztgenannte Maßnahme erfordert, dass die Führungselemente 33 des Grundkörpers 30 der Sicherungsvorrichtung 3 mit den die Führungsbahn 13 bildenden Längsnuten außer Eingriff bringbar sind. Hierzu weisen die an der Unterseite 31 des Grundkörpers 30 der Sicherungsvorrichtung 3 vorgesehenen Führungselemente 33 abgeschrägte seitliche Ränder 33a (Flanken) auf, vergleiche Figur 4. Als Folge hiervon können die Führungselemente 33 des Grundkörpers 30 durch eine Schwenkbewegung in der durch die Längsnuten der Führungsbahn 13 aufgespannten Ebene mit den Längsnuten (also der Führungsbahn) außer Eingriff gebracht werden. Anschließend kann der Grundkörper 30 dann zusammen mit dem Klemmelement 35 senkrecht zur Verschieberichtung V (und senkrecht zu der beschriebenen Kippebene) vom Trägerkörper 1 abgehoben werden, wobei die aus den zugehörigen Längsnuten 13 herausgeschwenkten Führungselemente 33 des Grundkörpers 30 aus dem Hohlprofil 10 des Trägerkörpers 1 entnommen werden.

Die hierfür erforderliche Schwenkbewegung des Grundkörpers 30 der Sicherungsvorrichtung 3 in der durch die Längsnuten der Führungsbahn 13 aufgespannten Ebene entspricht dem Neigungswinkel der schrägen Ränder 33a (Flanken) bezüglich der Verschieberichtung V. Eine entsprechende Schwenkbewegung B des Grundkörpers 30 und des Klemmelementes 35 der Sicherungsvorrichtung 3 in der durch die Längsnuten der Führungsbahn 13 aufgespannten Ebene ist in Figur 3 mit einem Pfeil angedeutet. Durch diese Schwenkbewegung B geraten die zunächst schräg zur Verschieberichtung V verlaufenden seitlichen Ränder 33a (Flanken) der Führungselemente 33 in eine Orientierung, in der sie sich parallel zur Verschieberichtung V erstrecken. Der Abstand b zwischen den beiden parallel zueinander verlaufenden, abgeschrägten seitlichen Rändern 33a der Führungselemente 33 ist so gewählt, dass dieser geringfügig kleiner ist als der Abstand zwischen den beiden die Führungsbahn 13 bildenden Längsnuten quer zur Verschieberichtung. Dies ermöglicht eine anschließende Entnahme des Grundkörpers 30 der Sicherungsvorrichtung 3 zusammen mit dem Klemmelement 35 entlang der in Figur 3 dargestellten Entnahmerichtung E senkrecht zu der durch die Längsnuten der Führungsbahn 13 aufgespannten Ebene. Die Entnahmerichtung E bildet also eine Normale auf die Ebene, in der der Grundkörper 30 und das Klemmelement 35 der Sicherungsvorrichtung 3 verschwenkt werden, um die Führungselemente 33 außer Eingriff mit den Längsnuten der Führungsbahn 13 zu bringen und den Grundkörper 30 zusammen mit dem Klemmelement 35 entlang jener Entnahmerichtung E vom Trägerkörper 1 abheben zu können.

Diese Ausbildung eines Grundkörpers 30 einer Sicherungsvorrichtung 3 für einen Montagefuß 20 einer Messeinrichtung 1, 2 ist unabhängig davon vorteilhaft und anwendbar, dass die Ver- und Entriegelung der Sicherungsvorrichtung 3 vorliegend durch Verschwenken eines mit einer Exzenterfläche 36 versehenen Klemmelementes 35 erfolgt. Sie kann auch bei nach andersartigen technischen Prinzipien arbeitenden Sicherungsvorrichtungen eingesetzt werden.

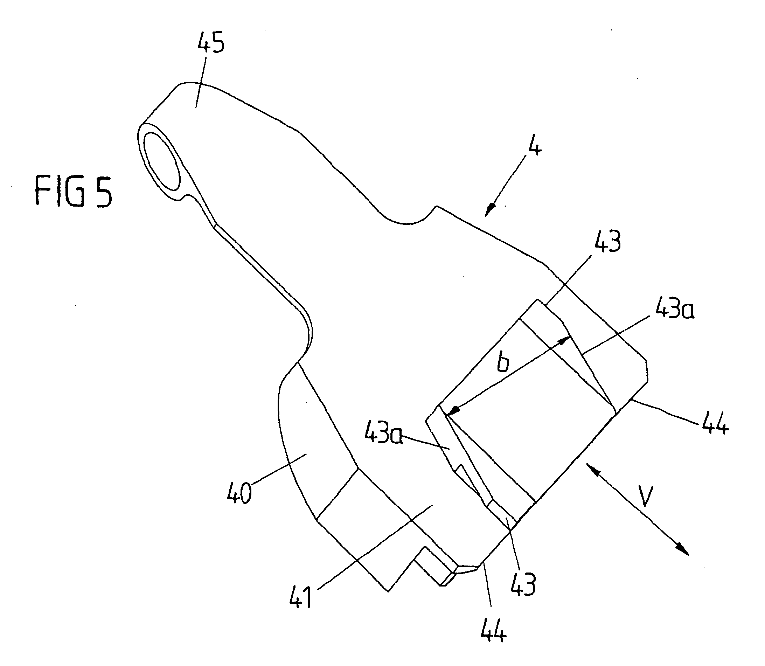

In entsprechender Weise kann das Führungsteil 4 von der anderen Stirnseite des Montagefußes 2 einerseits dadurch abgezogen werden, dass die führungsteilseitigen Steckerelemente 42 mit den montagefußseitigen Steckeröffnungen 29 entlang der Verschieberichtung V außer Eingriff gebracht werden, z. B. durch Ausübung einer Zugkraft am Zugmittel 45. Anschließend kann das Führungsteil 4 entlang der Verschieberichtung V von dem Trägerkörper 1 abgezogen werden. Alternativ können auch hier gemäß Figur 5 die an der Unterseite 41 des Führungsteiles 4 vorgesehenen, in die Längsnuten der Führungsbahn 13 eingreifenden Führungselemente 43 derart abgeschrägte, in einem definierten Abstand b parallel zueinander verlaufende seitliche Ränder 43a (Flanken) aufweisen, dass durch Verschwenken des Führungsteiles 4 in der durch die Längsnuten 13 aufgespannten Ebene die Führungselemente 43 außer Eingriff mit den Längsnuten der Führungsbahn 13 geraten und das Führungsteil 4 senkrecht zur Verschieberichtung V abgehoben werden kann. Der hierfür erforderliche Schwenkwinkel des Führungsteiles 4 in der durch die Führungsbahn 13, also durch die beiden parallel zueinander erstreckten, die Führungsbahn 13 bildenden Längsnuten aufgespannten Ebene entspricht dabei der Neigung der abgeschrägten seitlichen Ränder 43a (Flanken) der Führungselemente 43 bezüglich der Verschieberichtung V.

Eine entsprechende Schwenkbewegung B des Führungsteiles 4 in der durch die Längsnuten der Führungsbahn 13 aufgespannten Ebene ist in Figur 3 durch einen Pfeil angedeutet; ebenso wie die senkrecht zu jener Ebene verlaufende Entnahmerichtung E, entlang der das Führungsteil 4 aus der durch die Längsnuten gebildeten Führungsbahn 13 entnehmbar ist. Mit anderen Worten ausgedrückt bildet die Entnahmerichtung E des Führungsteiles 4 eine Normale auf die Ebene, in der die Schwenkbewegung B erfolgt, mit der das Führungsteil 4 außer Eingriff mit der Führungsbahn 13 bringbar sind.

## Patentansprüche

1. Sicherungsvorrichtung (3) für den Transport und die Montage einer Messeinrichtung zur Bestimmung der Lage zweier relativ zueinander beweglicher Bauteile mit einer längserstreckten Messteilung (5), einem die Messteilung tragenden Trägerkörper (1), einer die Messteilung abtastenden Abtasteinrichtung (2), die entlang der Messteilung beweglich geführt ist, und einem Montagefuß (20) zum Befestigen der Abtasteinrichtung (2) an einem der zueinander beweglichen Bauteile, wobei die Sicherungsvorrichtung (3) einen entlang einer Führungsbahn (13) des Trägerkörpers (1) längsverschieblichen Grundkörper (30) umfasst, der an dem Trägerkörper (1) durch Klemmkräfte festlegbar ist, um den Montagefuß (20) in einer Solllage bezüglich des Trägerkörpers (1) zu halten,
**dadurch gekennzeichnet,**
**dass** an dem Grundkörper (30) der Sicherungsvorrichtung (3) ein Klemmelement (35) schwenkbar gelagert ist, das eine exzentrisch bezüglich der Schwenkachse (S) ausgebildete Exzenterfläche (36) aufweist, und dass durch Verschwenken des Klemmelementes (35) die Exzenterfläche (36) derart in Eingriff mit dem Trägerkörper (1) bringbar ist, dass der Grundkörper (30) beim Verschwenken des Klemmelementes (35) an dem Trägerkörper (1) festgelegt wird und in einen Zustand bringbar ist, in dem er verschieblich am Trägerkörper (1) lagert.

2. Sicherungsvorrichtung nach Anspruch 1, **dadurch gekennzeichnet, dass** der Grundkörper (30) der Sicherungsvorrichtung (3) an dem Trägerkörper (1) festgeklemmt ist, wenn das Klemmelement (35) in eine Lage verschwenkt ist, in der die Exzenterfläche (36) des Klemmelementes (35) mit dem Trägerkörper (1) in Eingriff steht, wobei die Exzenterfläche (36) des Klemmelementes (35) derart gegen den Trägerkörper (1) drückt, dass der Grundkörper (30) der Sicherungsvorrichtung (3) aufgrund der hiermit verbundenen Reaktionskräfte an dem Trägerkörper (1) festgeklemmt ist.

3. Sicherungsvorrichtung nach einem der vorhergehenden Ansprüche, **dadurch gekennzeichnet, dass** der Grundkörper (30) der Sicherungsvorrichtung (3) entlang des Trägerkörpers (1) verschieblich ist, wenn das Klemmelement (35) in eine Lage verschwenkt ist, in der die Exzenterfläche (36) des Klemmelementes (35) außer Eingriff mit dem Trägerkörper (1) steht.

4. Sicherungsvorrichtung nach einem der vorhergehenden Ansprüche, **dadurch gekennzeichnet, dass** durch Einwirkung der Exzenterfläche (36) des Klemmelementes (35) auf den Trägerkörper (1) der Grundkörper (30) der Sicherungsvorrichtung (3) derart gegen den Trägerkörper (1) verspannbar ist, dass der Grundkörper (30) an dem Trägerkörper (1) festgeklemmt wird.

5. Sicherungsvorrichtung nach Anspruch 4, **dadurch gekennzeichnet, dass** der Grundkörper (30) der Sicherungsvorrichtung (3) gegen einen die Führungsbahn (13) begrenzenden Vorsprung (14) verspannbar ist.

6. Sicherungsvorrichtung nach einem der vorhergehenden Ansprüche, **dadurch gekennzeichnet, dass** die Führungsbahn (13) durch mindestens eine Führungsnut gebildet wird.

7. Sicherungsvorrichtung nach einem der vorhergehenden Ansprüche, **dadurch gekennzeichnet, dass** der Grundkörper (30) der Sicherungsvorrichtung (3) mindestens ein in der Führungsbahn (13) geführtes Führungselement (33) aufweist, das an einem die Führungsbahn (13) begrenzenden Vorsprung (14) festklemmbar ist.

8. Sicherungsvorrichtung nach einem der vorhergehenden Ansprüche, **dadurch gekennzeichnet, dass** die Sicherungsvorrichtung (3) genau einen Grundkörper (30) umfasst, der an einer der beiden in Verschieberichtung (V) voneinander beabstandeten Stirnseiten des Montagefußes (20) anzuordnen ist.

9. Sicherungsvorrichtung nach Anspruch 8, **dadurch gekennzeichnet, dass** an der anderen Stirnseite des Montagefußes (20) ein in der Führungsbahn (13) des Trägerkörpers (1) geführtes Führungsteil (4) angeordnet ist, das gemeinsam mit dem Montagefuß (20) entlang der Verschieberichtung (V) bewegbar ist.

10. Sicherungsvorrichtung nach Anspruch 9, **dadurch gekennzeichnet, dass** das Führungsteil (4) lösbar mit dem Montagefuß (20) verbunden ist.

11. Sicherungsvorrichtung nach Anspruch 10, **dadurch gekennzeichnet, dass** das Führungsteil (4) über eine Steckverbindung (29, 42) mit dem Montagefuß (20) verbunden ist.

12. Sicherungsvorrichtung nach einem der Ansprüche 9 bis 11, **dadurch gekennzeichnet, dass** am Führungsteil (4) ein Zugmittel (45) derart angeordnet ist, dass durch Aufbringen einer Zugkraft auf das Zugmittel (45) das Führungsteil (4) von dem Montagefuß (20) lösbar ist.

13. Sicherungsvorrichtung nach einem der vorhergehenden Ansprüche, **dadurch gekennzeichnet, dass** der Grundkörper (30) der Sicherungsvorrichtung (3) lösbar mit dem Montagefuß (20) verbunden ist.

14. Sicherungsvorrichtung nach Anspruch 13, **dadurch gekennzeichnet, dass** der Grundkörper (30) der Sicherungsvorrichtung (3) durch eine Steckverbindung (28, 32) mit dem Montagefuß (20) verbunden ist.

15. Sicherungsvorrichtung nach Anspruch 14, **dadurch gekennzeichnet, dass** grundkörperseitige Steckerelemente (32) der Steckverbindung (28, 32) mit montagefußseitigen Steckerelementen (28) der Steckverbindung (28, 32) verspannt sind, wenn das Klemmelement (35) in eine Lage verschwenkt ist, in der dessen Exzenterfläche (36) in Eingriff mit dem Trägerkörper (1) steht.

16. Sicherungsvorrichtung nach einem der vorhergehenden Ansprüche, **dadurch gekennzeichnet, dass** das Klemmelement (35) einen Betätigungsabschnitt (37) zum manuellen Verschwenken des Klemmelementes (35) aufweist.

17. Sicherungsvorrichtung nach Anspruch 16, **dadurch gekennzeichnet, dass** der Betätigungsabschnitt (37) zum manuellen Verschwenken des Klemmelementes (35) als eine Erhebung des Klemmelementes (35) ausgebildet ist.

18. Sicherungsvorrichtung nach einem der vorherigen Ansprüche, **dadurch gekennzeichnet, dass** das Klemmelement (35) einen Betätigungsabschnitt (38) zum Verschwenken des Klemmelementes (35) mit einem Werkzeug aufweist.

19. Sicherungsvorrichtung nach Anspruch 18, **dadurch gekennzeichnet, dass** der Betätigungsabschnitt (38) derart am Klemmelement (35) angeordnet ist, dass ein zugehöriges Werkzeug entlang einer im Wesentlichen quer zur Verschieberrichtung (V) des Grundkörpers (30) verlaufenden Richtung mit dem Betätigungsabschnitt (38) in Eingriff bringbar ist.

20. Sicherungsvorrichtung nach einem der vorhergehenden Ansprüche, **dadurch gekennzeichnet, dass** am Klemmelement (35) ein Vorsprung (39) derart angeordnet ist, dass beim Verschwenken des Klemmelementes (35), um die Exzenterfläche (36) außer Eingriff mit dem Trägerkörper (1) zu bringen, der Vorsprung (39) derart mit dem Montagefuß (20) in Anschlag bringbar ist, dass an der Sicherungsvorrichtung (3) eine Lösekraft wirkt, die die Tendenz hat, die Sicherungsvorrichtung (3) vom Montagefuß (20) zu entfernen.

21. Sicherungsvorrichtung nach Anspruch 1, **dadurch gekennzeichnet, dass** der Grundkörper (30) der Sicherungsvorrichtung (3) derart längsverschieblich in der Führungsbahn (13) des Trägerkörpers (1) gelagert ist, dass der Grundkörper (30) durch eine Schwenkbewegung in einer durch die Führungsbahn (13) aufgespannten Ebene des Grundkörpers (30) außer Eingriff mit der Führungsbahn (13) bringbar ist und entlang einer Richtung senkrecht zur Verschieberichtung (V) vom Trägerkörper (1) abgenommen werden kann.

22. Sicherungsvorrichtung nach Anspruch 21, **dadurch gekennzeichnet, dass** das mindestens eine Führungselement (33) des Grundkörpers (30) eine abgeschrägte Flanke (33a) aufweist, um das Führungselement (33) durch eine Bewegung des Grundkörpers (30) mit einer Komponente senkrecht zur Verschieberrichtung (V) mit der Führungsbahn (13) außer Eingriff bringen zu können.

23. Sicherungsvorrichtung nach Anspruch 9, **dadurch gekennzeichnet, dass** die Sicherungsvorrichtung (3) und das Führungsteil (4) über ein entlang des Montagefußes (20) längserstrecktes Koppelelement (6) miteinander gekoppelt sind, so dass die Sicherungsvorrichtung (3) und das Führungsteil (4) gemeinsam entlang des Trägerkörpers (1) verschieblich sind, wenn die Exzenterfläche (36) des Klemmelementes (35) außer Eingriff mit dem Trägerkörper (1) steht.

24. Sicherungsvorrichtung nach Anspruch 23, **dadurch gekennzeichnet, dass** das Koppelelement (6) lösbar an der Sicherungsvorrichtung (3) sowie an dem Führungsteil (4) festlegbar ist.

25. Messeinrichtung zur Bestimmung der Lage zweier relativ zueinander beweglicher Bauteile, mit einer längs erstreckten Messteilung, einem die Messteilung tragenden Trägerkörper (1), einer die Messteilung abtastenden Abtasteinrichtung (2), die entlang der Messteilung beweglich geführt ist und einen Montagefuß (20) zum Befestigen der Abtasteinrichtung (2) an einem der zueinander beweglichen Bauteile sowie mit einer Sicherungsvorrichtung (3) nach einem der vorhergehenden Ansprüche.

## Claims

1. Securing device (3) for transporting and assembling a measuring instrument for determining the position of two components moveable relative to one another, comprising a longitudinally extended measuring graduation (5), a support body (1) bearing the measuring graduation, a scanning device (2) which scans the measuring graduation and is guided moveably along the measuring graduation, and a mounting base (20) for fastening the scanning device (2) on one of the components which are movable with respect to one another, wherein the securing device (3) comprises a basic body (30) which is longitudinally displaceable along a guide path (13) of the support body (1) and can be fixed on the support body (1) by clamping forces in order to hold the mounting base (20) in a desired position with respect to the support body (1), **characterized in that** a clamping element (35) is pivotably mounted on the basic body (30) of the securing device, which clamping element has an eccentric surface (36) formed eccentrically with respect to the pivot axis (S), and **in that**, by pivoting the clamping element (35), the eccentric surface (36) can be brought into engagement with the support body (1) in such a way that the basic body (30) is fixed on the support body (1) when pivoting the clamping element (35) and can be brought into a state in which it is displaceably mounted on the support body (1).

2. Securing device according to Claim 1, **characterized in that** the basic body (30) of the securing device (3) is firmly clamped on the support body (1) when the clamping element (35) is pivoted into a position in which the eccentric surface (36) of the clamping element (35) is in engagement with the support body (1), wherein the eccentric surface (36) of the clamping element (35) presses against the support body (1) in such a way that the basic body (30) of the securing device (3) is firmly clamped on the support body (1) as a result of the reaction forces associated with this pressing.

3. Securing device according to one of the preceding claims, **characterized in that** the basic body (30) of the securing device (3) is displaceable along the support body (1) when the clamping element (85) is pivoted into a position in which the eccentric surface (36) of the clamping element (35) is out of engagement with the support body (1).

4. Securing device according to one of the preceding claims, **characterized in that**, owing to the action of the eccentric surface (36) of the clamping element (35) on the support body (1), the basic body (30) of the securing device (3) can be braced against the support body (1) in such a way that the basic body (30) is firmly clamped on the support body (1)

5. Securing device according to Claim 4, **characterized in that** the basic body (30) of the securing device (3) can be braced against a projection (14) delimiting the guide path (13).

6. Securing device according to one of the preceding claims, **characterized in that** the guide path (13) is formed by at least one guide groove.

7. Securing device according to one of the preceding claims, **characterized in that** the basic body (30) of the securing device (3) has at least one guide element (33) which is guided in the guide path (13) and can be firmly clamped on a projection (14) delimiting the guide path (13).

8. Securing device according to one of the preceding claims, **characterized in that** the securing device (3) comprises exactly one basic body (30) which is to be arranged on one of the two end faces of the mounting base (20) which are spaced apart from one another in the displacement direction (V).

9. Securing device according to Claim 8, **characterized in that** a guide part (4) which is guided in the guide path (13) of the support body (1) is arranged on the other end face of the mounting base (20) and can be moved together with the mounting base (20) along the displacement direction (V).

10. Securing device according to Claim 9, **characterized in that** the guide part (4) is releasably connected to the mounting base (20).

11. Securing device according to Claim 10, **characterized in that** the guide part (4) is connected to the mounting base (20) via a plug-in connection (29, 42).

12. Securing device according to one of Claims 9 to 11, **characterized in that** a pulling means (45) is arranged on the guide part (4) in such a way that the guide part (4) can be released from the mounting base (20) by applying a pulling force on the pulling means (45).

13. Securing device according to one of the preceding claims, **characterized in that** the basic body (30) of the securing device (3) is releaseably connected to the mounting base (20).

14. Securing device according to Claim 13, **characterized in that** the basic body (30) of the securing device (3) is connected to the mounting base (20) by a plug-in connection (28, 32).

15. Securing device according to Claim 14, **characterized in that** basic body plug elements (32) of the plug-in connection (28, 32) are braced with mounting base plug elements (28) of the plug-in connection (28, 32) when the clamping element (35) is pivoted into a position in which its eccentric surface (36) is in engagement with the support body (1).

16. Securing device according to one of the preceding claims, **characterized in that** the clamping element (35) has an actuating portion (37) for manually pivoting the clamping element (35).

17. Securing device according to Claim 16, **characterized in that** the actuating portion (37) for manually pivoting the clamping element (35) is designed as an elevation of the clamping element (35).

18. Securing device according to one of the preceding claims, **characterized in that** the clamping element (35) has an actuating portion (38) for pivoting the clamping element (35) by means of a tool.

19. Securing device according to Claim 18, **characterized in that** the actuating portion (38) is arranged on the clamping element (35) in such a way that an associated tool can be brought into engagement with the actuating portion (38) along a direction extending substantially transversally to the displacement direction (V) of the basic body (30).

20. Securing device according to one of the preceding claims, **characterized in that** a projection (39) is arranged on the clamping element (35) in such a way that, when pivoting the clamping element (35), in order to bring the eccentric surface (36) out of engagement with the support body (1), the projection (39) can be brought into contact with the mounting base (20) in such a way that a release force acts on securing device (3), which release force has the tendency of distancing the securing device (3) from the mounting base (20).

21. Securing device according to Claim 1, **characterized in that** the base body (30) of the ) securing device (3) is mounted longitudinally displaceably in the guide path (13) of the support body (1) in such a way that the basic body (30) can be brought out of engagement with the guide path (13) by a pivoting movement in a plane of the basic body (30) defined by the guide path (13) and can be removed from the support body (1) along a direction perpendicular to the displacement direction (V).

22. Securing device according to Claim 21, **characterized in that** the at least one guide element (33) of the basic body (30) has a bevelled flank (33a) in order to be able to bring the guide element (33) out of engagement with the guide path (13) by a movement of the basic body (30) with a component perpendicular to the displacement direction (V).

23. Securing device according to Claim 9, **characterized in that** the securing device (3) and the guide part (4) are coupled to one another via a coupling element (6) longitudinally extended along the mounting base (20), such that the securing device (3) and the guide part (4) are jointly displaceable along the support body (1) when the eccentric surface (36) of the clamping element (35) is out of engagement with the support body (1).

24. Securing device according to Claim 23, **characterized in that** the coupling element (6) can be releaseably fixed on the securing device (3) and also on the guide part (4).

25. Measuring instrument for determining the position of two components moveable relative to one another, comprising a longitudinally extended measuring graduation, a support body (1) bearing the measuring graduation, a scanning device (2) which scans the measuring graduation and is guided moveably along the measuring graduation, and a mounting base (20) for fastening the scanning device (2) on one of the components which are moveable with respect to one another, and also a securing device (3) according to one of the preceding claims.

## Revendications

1. Dispositif de fixation (3) pour le transport et le montage d'un dispositif de mesure pour déterminer la position de deux composants mobiles l'un par rapport à l'autre avec une échelle de mesure allongée (5), un corps porteur (1) portant l'échelle de mesure, un dispositif de lecture (2) lisant l'échelle de mesure, lequel est guidé de manière mobile le long de l'échelle de mesure, et une base de montage (20) pour la fixation du dispositif de lecture (2) sur l'un des composants mobiles l'un par rapport à l'autre, le dispositif de fixation (3) comprenant un corps de base (30) déplaçable longitudinalement le long d'une piste de guidage (13) du corps porteur (1), lequel peut être fixé au corps porteur (1) par des forces de serrage afin de retenir la base de montage (20) dans une position de consigne par rapport au corps porteur (1),
**caractérisé en ce**
**qu'**un élément de serrage (35) est monté de manière pivotante sur le corps de base (30) du dispositif de fixation (3), lequel élément de serrage présente une surface excentrique (36) réalisée de manière excentrique par rapport à l'axe de pivotement (S), et en ce que, par pivotement de l'élément de serrage (35), la surface excentrique (36) peut être amenée en prise avec le corps porteur (1) de telle sorte que le corps de base (30), lors du pivotement de l'élément de serrage (35), soit fixé sur le corps porteur (1) et puisse être amené dans un état dans lequel il est monté de manière déplaçable sur le corps porteur (1).

2. Dispositif de fixation selon la revendication 1, **caractérisé en ce que** le corps de base (30) du dispositif de fixation (3) est serré fixement sur le corps porteur (1) lorsque l'élément de serrage (35) est pivoté dans une position dans laquelle la surface excentrique (36) de l'élément de serrage (35) est en prise avec le corps porteur (1), la surface excentrique (36) de l'élément de serrage (35) pressant contre le corps porteur (1) de telle sorte que le corps de base (30) du dispositif de fixation (3) soit serré fixement sur le corps porteur (1) sous l'effet des forces de réaction associées à celui-ci.

3. Dispositif de fixation selon l'une quelconque des revendications précédentes, **caractérisé en ce que** le corps de base (30) du dispositif de fixation (3) est déplaçable le long du corps porteur (1) lorsque l'élément de serrage (35) est pivoté dans une position dans laquelle la surface excentrique (36) de l'élément de serrage (35) est hors d'engagement avec le corps porteur (1).

4. Dispositif de fixation selon l'une quelconque des revendications précédentes, **caractérisé en ce que** sous l'action de la surface excentrique (36) de l'élément de serrage (35) sur le corps porteur (1), le corps de base (30) du dispositif de fixation (3) peut être serré contre le corps porteur (1) de telle sorte que le corps de base (30) soit serré fixement sur le corps porteur (1).

5. Dispositif de fixation selon la revendication 4, **caractérisé en ce que** le corps de base (30) du dispositif de fixation (3) peut être serré contre une saillie (14) limitant la piste de guidage (13).

6. Dispositif de fixation selon l'une quelconque des revendications précédentes, **caractérisé en ce que** la piste de guidage (13) est formée par au moins une rainure de guidage.

7. Dispositif de fixation selon l'une quelconque des revendications précédentes, **caractérisé en ce que** le corps de base (30) du dispositif de fixation (3) présente au moins un élément de guidage (33) guidé dans la piste de guidage (13), lequel peut être serré fixement sur une saillie (14) limitant la piste de guidage (13).

8. Dispositif de fixation selon l'une quelconque des revendications précédentes, **caractérisé en ce que** le dispositif de fixation (3) comprend exactement un corps de base (30) qui doit être disposé au niveau de l'un des deux côtés frontaux de la base de montage (20) espacés l'un de l'autre dans la direction de déplacement (V).

9. Dispositif de fixation selon la revendication 8, **caractérisé en ce qu'**au niveau de l'autre côté frontal de la base de montage (20) est disposée une partie de guidage (4) guidée dans la piste de guidage (13) du corps porteur (1), laquelle partie de guidage peut être déplacée conjointement avec la base de montage (20) le long de la direction de déplacement (V).

10. Dispositif de fixation selon la revendication 9, **caractérisé en ce que** la partie de guidage (4) est connectée de manière détachable à la base de montage (20).

11. Dispositif de fixation selon la revendication 10, **caractérisé en ce que** la partie de guidage (4) est connectée à la base de montage (20) par le biais d'une connexion enfichable (29, 42).

12. Dispositif de fixation selon l'une quelconque des revendications 9 à 11, **caractérisé en ce qu'**un moyen de traction (45) est disposé sur la partie de guidage (4) de telle sorte que par l'application d'une force de traction sur le moyen de traction (45), la partie de guidage (4) puisse être détachée de la base de montage (20).

13. Dispositif de fixation selon l'une quelconque des revendications précédentes, **caractérisé en ce que** le corps de base (30) du dispositif de fixation (3) est connecté de manière détachable à la base de montage (20).

14. Dispositif de fixation selon la revendication 13, **caractérisé en ce que** le corps de base (30) du dispositif de fixation (3) est connecté à la base de montage (20) par une connexion enfichable (28, 32).

15. Dispositif de fixation selon la revendication 14, **caractérisé en ce que** des éléments d'enfichage (32), du côté du corps de base, de la connexion enfichable (28, 32) sont serrés avec des éléments d'enfichage (28), du côté de la base de montage, de la connexion enfichable (28, 32) lorsque l'élément de serrage (35) est pivoté dans une position dans laquelle sa surface excentrique (36) est en prise avec le corps porteur (1).

16. Dispositif de fixation selon l'une quelconque des revendications précédentes, **caractérisé en ce que** l'élément de serrage (35) présente une portion d'actionnement (37) pour le pivotement manuel de l'élément de serrage (35).

17. Dispositif de fixation selon la revendication 16, **caractérisé en ce que** la portion d'actionnement (37) est réalisée sous la forme d'un rehaussement de l'élément de serrage (35) pour le pivotement manuel de l'élément de serrage (35).

18. Dispositif de fixation selon l'une quelconque des revendications précédentes, **caractérisé en ce que** l'élément de serrage (35) présente une portion d'actionnement (38) pour faire pivoter l'élément de serrage (35) avec un outil.

19. Dispositif de fixation selon la revendication 18, **caractérisé en ce que** la portion d'actionnement (38) est disposée sur l'élément de serrage (35) de telle sorte qu'un outil associé puisse être amené en prise avec la portion d'actionnement (38) le long d'une direction s'étendant essentiellement transversalement par rapport à la direction de déplacement (V) du corps de base (30).

20. Dispositif de fixation selon l'une quelconque des revendications précédentes, **caractérisé en ce qu'**une saillie (39) est disposée sur l'élément de serrage (35) de telle sorte que lors du pivotement de l'élément de serrage (35), afin d'amener la surface excentrique (36) hors d'engagement avec le corps porteur (1), la saillie (39) puisse être amenée en butée contre la base de montage (20) de telle sorte qu'une force de desserrage agisse sur le dispositif de fixation (3), laquelle a tendance à écarter le dispositif de fixation (3) de la base de montage (20).

21. Dispositif de fixation selon la revendication 1, **caractérisé en ce que** le corps de base (30) du dispositif de fixation (3) est monté de manière déplaçable longitudinalement dans la piste de guidage (13) du corps porteur (1) de telle sorte que le corps de base (30), par un mouvement de pivotement dans un plan du corps de base (30) formé par la piste de guidage (13), puisse être amené hors d'engagement avec la piste de guidage (13) et puisse être enlevé le long d'une direction perpendiculaire à la direction de déplacement (V) du corps porteur (1).

22. Dispositif de fixation selon la revendication 21, **caractérisé en ce que** l'au moins un élément de guidage (33) du corps de base (30) présente un flanc biseauté (33a) afin de pouvoir amener l'élément de guidage (33), par un déplacement du corps de base (30) avec une composante perpendiculaire à la direction de déplacement (V), hors d'engagement avec la piste de guidage (13).

23. Dispositif de fixation selon la revendication 9, **caractérisé en ce que** le dispositif de fixation (3) et la partie de guidage (4) sont accouplés l'un à l'autre par le biais d'un élément d'accouplement (6) allongé le long de la base de montage (20), de telle sorte que le dispositif de fixation (3) et la partie de guidage (4) puissent être déplacés conjointement le long du corps porteur (1) lorsque la surface excentrique (36) de l'élément de serrage (35) est hors d'engagement avec le corps porteur (1).

24. Dispositif de fixation selon la revendication 23, **caractérisé en ce que** l'élément d'accouplement (6) peut être fixé de manière détachable sur le dispositif de fixation (3) ainsi que sur la partie de guidage (4).

25. Dispositif de mesure pour déterminer la position de deux composants mobiles l'un par rapport à l'autre, comprenant une échelle de mesure allongée longitudinalement, un corps porteur (1) portant l'échelle de mesure, un dispositif de lecture (2) lisant l'échelle de mesure, lequel est guidé de manière mobile le long de l'échelle de mesure, et une base de montage (20) pour la fixation du dispositif de lecture (2) sur l'un des composants mobiles l'un par rapport à l'autre ainsi qu'un dispositif de fixation (3) selon l'une quelconque des revendications précédentes.
